# EUROPEAN PATENT SPECIFICATION

(11) **EP 2 943 267 B1**
(45) Date of publication and mention of the grant of the patent: **18.03.2020**
(21) Application number: 13870688.2
(22) Date of filing: 09.01.2013
(51) Int. Cl.: B01D 53/14, B01D 53/62, B01D 53/78

(54) **SYSTEMS AND METHODS FOR REDUCING THE ENERGY REQUIREMENTS OF A CARBON DIOXIDE CAPTURE PLANT**
SYSTEME UND VERFAHREN ZUR REDUZIERUNG DES ENERGIEBEDARFS EINER KOHLENDIOXIDERFASSUNGSANLAGE
SYSTÈMES ET PROCÉDÉS POUR RÉDUIRE LES BESOINS EN ÉNERGIE D'UNE UNITÉ DE CAPTURE DE DIOXYDE DE CARBONE

(43) Date of publication of application: 18.11.2015
(73) Proprietor: Fluor Technologies Corporation, Sugar Land, TX 77478 (US)
(72) Inventor: REDDY, Satish, Laguna Beach, CA 92651 (US); YONKOSKI, Joseph, Irvine, CA92612 (US)
(74) Representative: Pallini Gervasi, Diego
(86) International application number: PCT/US2013/020890
(87) International publication number: WO 2014/109742

(56) References cited:
- EP-A1- 1 967 249
- EP-A1- 2 511 001
- WO-A1-2011/073671
- WO-A1-2012/038865
- US-A- 3 932 582
- US-A- 4 444 571
- US-A1- 2007 221 065
- US-A1- 2010 050 637
- US-A1- 2012 125 196

## Description

### Field of the Invention

The field of the invention is systems and methods for capturing carbon dioxide.

### Background

Despite the growing availability of alternative energy sources, the energy needs of most of the world are primarily met by the combustion of fossil fuels such as coal, oil, and natural gas. Among other byproducts, such combustion produces carbon dioxide (CO₂), the release of which into the environment is becoming increasingly regulated. CO₂ emissions may be mitigated, at least in part, by capturing CO₂ directly from large sources of emissions, such as generating plants that combust fossil fuels as a power source. Rather than simply venting CO₂ into the atmosphere, CO₂ can be removed from flue gases using a CO₂ absorber. The captured CO₂ may then be utilized in other processes or sequestered. Similar capture methods can also be applied to other industrial processes that generate significant amounts of CO₂ including, for example, ammonia production, fermentation processes, removal of CO₂ from natural gas or biofuel products, and so forth.

CO₂ is generally separated from a gas mixture by absorption. The flue gas, for example, may be a flue gas generated by a boiler that produces steam for a power plant. In a typical process the gas mixture is passed through an absorption column where the gas is exposed to a capture medium that absorbs some or all of the CO₂ component of the mixture. Typically, this absorbent is in a liquid phase and is often an aqueous solvent that contains one or more amine compounds. Such a process is sometimes referred to as wet scrubbing. The gas mixture is passed through the absorption solution at pressure and temperature conditions that permit absorption of substantially all the CO₂ into the absorption solvent. The CO₂-lean gas mixture emerges at the top of the absorption column and may be directed for further processing as necessary. The absorption solvent, which is now rich in CO₂ (*i.e.* a rich solvent), exits from the bottom of the absorption column, and is then subjected to a stripping process to remove the CO₂ and regenerate an absorption solvent that is lean in CO₂ (*i.e.* a lean solvent).

Regeneration of the lean solvent typically involves heating the rich solvent to reduce the solubility of CO₂. To ensure complete or near complete removal of CO₂, the rich solvent may undergo successive cycles of reheating. In a typical solvent regeneration process, rich solvent is introduced into a regeneration column at a high temperature. This elevated temperature is maintained by a reboiler. At these elevated temperatures, the rich solvent releases absorbed CO₂. The regenerated lean solvent may be collected from the bottom of the regeneration column for reuse in the absorption column, while a gas phase containing the stripped CO₂ (along with water) is collected from the top of the regeneration column. This gas phase may be passed through a condenser system that condenses water vapor and returns the liquid to the regeneration column. The released CO₂ may then be collected for reutilization or sequestration.

As noted above, the energy requirements for existing absorption and recovery processes can be significant, in large part due to the heat required for stripping CO₂ from the rich solvent. Because this heat is typically derived from steam that would otherwise be used for power production, the heat requirements of the reboiler can reduce net power production. Attempts have been made to reduce this burden by redirecting heat from other plant processes. For example, U.S. pat. no. 5344627 (to Fujii et al) discusses discharging steam from a high pressure turbine and directing it to an auxiliary turbine that powers a compressor used to liquefy recovered CO₂. The steam discharge of this auxiliary turbine provides heat for a reboiler. In WIPO publ. no. WO2011/073671, Hume and Kuczynska describe a similar approach in which steam discharged from a high pressure turbine is utilized to drive a back pressure turbine, which in turn drives a compressor used to compress CO₂ recovered from the rich solvent. This compression produces heat, which along with heat from the exhaust of the back pressure turbine, is supplied to the reboiler. However, since the discharge from high pressure turbines is typically utilized in lower pressure turbines to generate additional power, these approaches still directly impact power generation.

A similar approach is described in U.S. pat. publ. no. 2010/0050637 (to Yamashita et al), which discloses diverting a portion of the steam input to a low pressure turbine to drive an auxiliary turbine, and utilizing the steam exhaust from this auxiliary turbine as a heat source for a reboiler. Since this directly impacts the power output of the low pressure turbine, however, power generation is still impacted. An alternative approach is disclosed in U.S. pat. publ. no. 2010/0050637 (to Yamashita et al)*,* where a reboiler is supplied with heat via a heating medium, which is in turn receives heat from the flue that transports the initial waste gases via a heat exchanger. It is, however, unclear if such a source can provide sufficient heat at the proper temperature for the needs of the reboiler. Furthermore, the European Patent Application Publication EP 1 967 249 A1 discloses a method for removing carbon dioxide from waste gases comprising using a stripping component during the regeneration of the solvent loaded with carbon dioxide. A scrubbing installation is described therein for removing carbon dioxide from waste gases. According to this method, the waste gas installation comprises a heat exchanger arranged between an absorber column and a desorber column, a condenser and a re-boiler connected to the sump of the desorber column.

Thus, there is still a need for systems and methods that reduce the energy requirements for regeneration of solvents used in CO₂ capture from flue gases, particularly in power generation plants that rely on fossil fuel combustion.

### Summary of the Invention

In accordance with the present invention, there is provided a system according to claim 1 and a method according to claim 4.

Various objects, features, aspects and advantages of the inventive subject matter will become more apparent from the following detailed description of preferred embodiments, along with the accompanying drawing figures in which like numerals represent like components.

### Brief Description of the Figures

Fig. 1 is a schematic of one embodiment not according to the present invention, in which heat from flue gas is utilized to heat reflux that is returned to a stripper.
Fig. 2 is a schematic of the inventive concept, in which heat from condensed low pressure steam is utilized to heat reflux that is returned to a stripper.
Fig. 3 illustrates a method not according to the present invention, in which a product from a stripper is treated for return to the stripper.
Fig. 4 illustrates a method not according to the present invention in which a product from a stripper is treated with heat from a second product of the stripper for return to the stripper.

### Detailed Description

It should be noted that while the following description is drawn to systems and methods for improving the energy efficiency of recovering CO₂ from flue gases, various alternative configurations are also deemed suitable and may be employed to treat any suitable source of CO₂ containing gas streams, such as streams from combustion processes in the oil and gas industry, cement plants, lime kiln exhausts, engine exhausts, fermentation processes, hydrogen production plants, ammonia production plants, processing of phosphates, and so forth. One should appreciate that compounds other than CO₂ may be recovered, including (but not limited to) CO, ammonia, nitrogen oxides, sulfur oxides, volatile organic carbon compounds, and chlorofluorocarbons, from gas streams containing such compounds.

One should also appreciate that the disclosed techniques provide many advantageous technical effects including reduction in the application of high temperature heat to solvents utilized in CO₂ recovery (thereby minimizing their degradation), reduction of water consumption in the CO₂ recovery process by generating stripping steam utilized for solvent recovery from process water, and reduction of the temperature of flue gases prior to CO₂ capture, thereby reducing the need for active cooling of flue gas prior to entering a CO₂ capture unit.

The inventive subject matter provides a system in accordance with claim 1 and a method according to claim 4 in which one can remove CO₂ from flue gases using a solvent system and regenerate the CO₂ capture solvent in an energy efficient manner. In one embodiment of the inventive concept, a boiler heated by fossil fuel combustion generates steam that may be used for power generation, for example by providing high pressure steam that is directed through a series of turbines used to generate electric power. It is contemplated, however, that systems and methods of the inventive concept may also be applied to combustion processes utilized in the coal, gas, and/or petroleum industries (such as, for example, from a reformer furnace, a gas turbine, a water heater, a steam generator, a reboiler, and a liquefied natural gas heater).

Such processes generate hot flue gas that contains CO₂, release of which into the atmosphere is being increasingly regulated. Therefore, there is considerable interest in the removal of CO₂ from such flue gas prior to being exhausted to the atmosphere; the CO₂ may then be utilized in other processes or sequestered to prevent environmental release. CO₂ may be captured from flue gas in a CO₂ capture unit. Typically, such devices provide contact between the flue gas and an absorptive media that solvates or otherwise captures CO₂. Typical liquid absorptive solvents include amines or similar compounds, often admixed with water. However, any commercially suitable solvent could be used. Uptake of CO₂ by such a solvent generates a rich solvent (*i.e.* a solvent rich in CO₂). For peak efficiency, such processes should be optimized for temperature and pressure that provides optimal CO₂ uptake by the solvent, which often requires cooling the hot flue gas from combustion processes (for example using refrigerated contact coolers) to bring the flue gas to optimal temperature.

Following absorption of CO₂ from flue gases, CO₂ is removed from the rich solvent using a stripper. Temperature and pressure conditions within the stripper decrease the solubility of CO₂ in the solvent; typically, the temperature of the absorptive solvent is increased in order to release the absorbed gas. In addition, strippers generally include internal packing or similar structure to increase surface area and expose more solvent to the internal atmosphere. Heat may be provided in the form of steam, which may be introduced through a lower portion of the stripper so that steam and solvent interact in a counterflow fashion. The resulting lean solvent may be collected from the lower part of the stripper (from where it may be returned for use in a CO₂ capture unit) while the released CO₂ can be collected from the upper portion. In practical terms it is often necessary to pass the solvent through the stripper repeatedly in order to remove all (or essentially all) of the absorbed CO₂, so solvent is typically refluxed through the stripper.

The process of removing CO₂ from the rich solvent therefore requires considerable heat energy, which is supplied to the solvent, at least in part, by a reboiler that is in fluid communication with the stripper. As noted above, it is a common practice to utilize a portion of the steam that is produced by a fossil fuel driven boiler to provide this heat, however this practice directly impacts the efficiency of the plant. Systems and methods of the inventive concept utilize heat energy produced by system processes to alternatively provide heat for the reboiler and thereby improve plant efficiency.

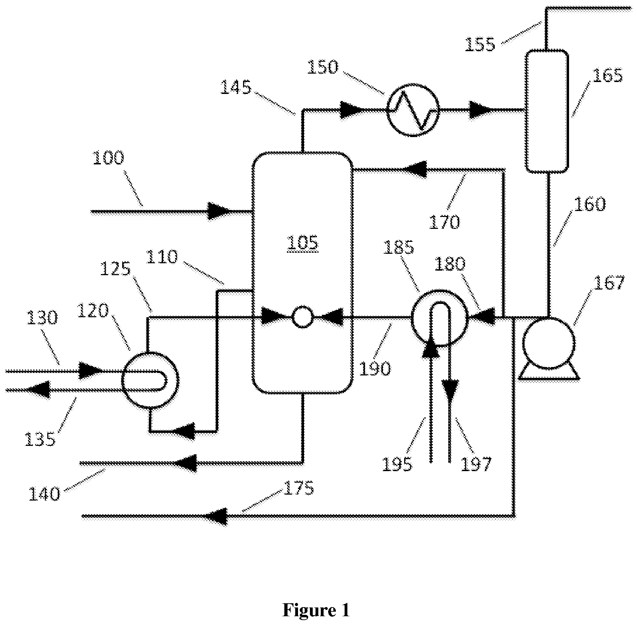

One embodiment not according to the present invention is shown in **FIG. 1****.** Rich solvent (**100**) from a CO₂ capture unit (not shown) is directed to a stripper (**105**). A semi-lean solvent (**110**) is collected from a point below the packing and directed to a reboiler (**120**), where it is heated. Heat energy is preferably supplied to the reboiler (**120**) in the form of low pressure steam (**130**), although any commercially suitable heat exchange media could be used. Such steam may, for example, be collected from the exhaust of a turbine. Examples of suitable turbines include, for example, a low pressure turbine from a series of high, mid, and low pressure turbines utilized for power generation and a turbine used to power a compressor. Utilization of such sources of low pressure steam also advantageously minimizes the impact on power generation. In addition, the use of steam raised from process water advantageously maintains the water balance of the plant by eliminating the need to inject water from an outside source into the system.

At least a portion of the low pressure steam condenses in this process, generating a reboiler condensate (**135**), and transferring the resulting heat of condensation from the condensing steam to the solvent. Utilization of this phase change for energy transfer advantageously reduces exposure of the solvent to high temperatures, such as those that are experienced when solvent is heated using high pressure steam, which minimizes degradation of the solvent. This results in vaporization of a portion of the semi-lean solvent, and the resulting two phase solvent (**125**) is returned to the stripper (**105**). This releases stripping steam within the stripper (**105**), where the substantially CO₂ free lean solvent (**140**) is removed from a lower portion of the stripper (**105**) and may be directed to a CO₂ capture unit. In some embodiments the lean solvent (**140**) is removed from the bottom of the stripper (**105**). Stripping steam rises through the stripper (**105**), carrying released CO₂ through the upper part of the stripper (**105**) as a CO₂ saturated stream (**145**). It is contemplated that CO₂ may be released from other components of the CO₂ saturated stream (**145**) by cooling in a condenser (**150**), and subsequently separated from liquid components in an accumulator (**165**). In typical overhead accumulator (**165**) configurations, product CO₂ (**155**) is collected from an upper portion and product condensate (**160**) is collected from a lower portion. This condensate (**160**) may be primarily water, but may include amines or other compounds utilized in the capture of CO₂.

Condensate (**160**) may be distributed to one or more destination processes, optionally with the aid of a pump (**167**). Embodiments may include one or more valves and/or pump(s) and an associated controller that permits control of the distribution of the condensate (**160**) in order to optimize plant operations. It is contemplated that condensate (**160**) may be directed to two or more destination processes and/locations simultaneously. In some embodiments of the inventive concept, at least a portion of the condensate (**160**) can be directed to the stripper (**105**) as reflux (**170**). In other embodiments, at least a portion of the condensate (**175**) can be directed to other parts of the plant. In still other embodiments, at least a portion of the condensate (**180**) can be directed to a reflux heater (**185**).

A reflux heater (**185**) may be used to heat the condensate (**160**) to generate steam (**190**) utilizing heat from a suitable source. Suitable sources include, for example, hot flue gas (**195**) and a reboiler condensate and may be transferred to the condensate (**160**) via a heat exchanger. Where the source is a flue gas, the flue gas may, for example, originate in a boiler utilized to generate steam for power generation, but may alternatively be obtained from other combustion sources such as a burner, a reformer furnace, a gas turbine, a water heater, a steam generator, a reboiler, and/or a liquefied natural gas heater. It is contemplated that one or more flue gas sources may be combined to provide a pooled flue gas source for the reflux heater (**185**). This process reduces the temperature of the flue gas to produce a cooled flue gas (**197**), which may be routed to other parts of the CO₂ capture process; this cooling of the flue gas advantageously reduces the size and/or duty cycle of cooling units utilized in the processing of hot flue gas prior to introduction to a CO₂ capture unit. Steam (**190**) produced in the reflux heater (**185**) may directed to the stripper (**105**), where it may be used to aid in the CO₂ removal process.

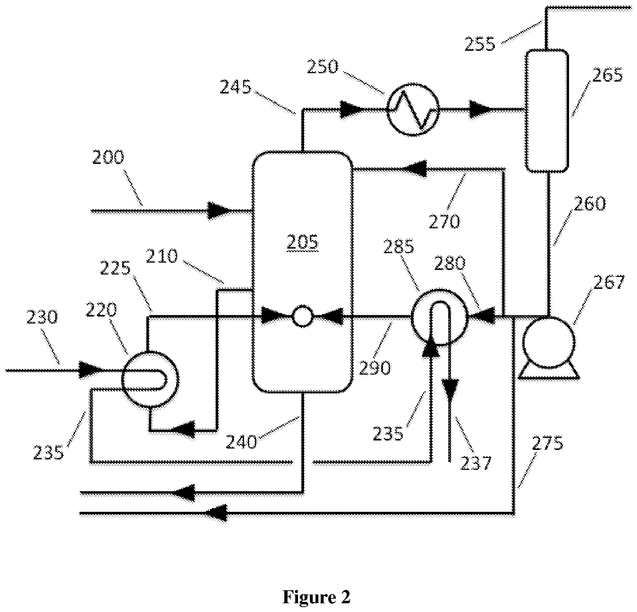

An embodiment of a system of the inventive concept is shown in **FIG. 2**. Rich solvent (**200**) from a CO₂ capture unit (not shown) is directed to a stripper (**205**). A semi-lean solvent (**210**) is collected from a point below the packing and directed to a reboiler (**220**), where it is heated. Heat energy is supplied to the reboiler (**220**) in the form of low pressure steam (**230**). Such steam may, for example, be collected from the exhaust of a turbine. Examples of suitable turbines include, but are not limited to, a low pressure turbine from a series of high, mid, and low pressure turbines utilized for power generation and a turbine used to power a compressor. Utilization of such sources of low pressure steam advantageously minimizes the impact on power generation.

At least a portion of the low pressure steam condenses in this process, generating a reboiler condensate (**235**), and transferring the resulting heat of condensation from the condensing steam to the solvent. Utilization of this phase change for energy transfer advantageously reduces exposure of the solvent to high temperatures, such as those that are experienced when solvent is heated using high pressure steam, which minimizes degradation of the solvent. This results in vaporization of a portion of the semi-lean solvent, and the resulting two phase solvent (**225**) is returned to the stripper (**205**). This releases stripping steam within the stripper (**205**), where the substantially CO₂ free lean solvent (**240**) is removed from a lower portion of the stripper (**205**) and may be directed to a CO₂ capture unit.

In some embodiments of the inventive concept, the lean solvent (**240**) is removed from the bottom of the stripper (**205**). Stripping steam rises through the stripper (**205**), carrying released CO₂ through the upper part of the stripper (**205**) as a CO₂ saturated stream (**245**). CO₂ is released from other components of the CO₂ saturated stream (**245**) by cooling in a condenser (**250**), and subsequently separated from liquid components in an accumulator (**265**). In typical overhead accumulator (**265**) configurations, product CO₂ (**255**) is collected from an upper portion and product condensate (**260**), condensate is collected from a lower portion. This condensate (**260**) may be primarily water, but may include amines or other compounds utilized in the capture of CO₂.

Condensate (**260**) may be distributed to one or more destination processes, optionally with the aid of a pump (**267**). Embodiments of the inventive concept may include one or more valves and/or pump(s) and an associated controller that permits control of the distribution or the condensate (**260**) in order to optimize plant operations. In some embodiments of the inventive concept, at least a portion of the condensate (**260**) can be directed to the stripper (**205**) as reflux (**270**). In other embodiments of the inventive concept, at least a portion of the condensate (**275**) can be directed to other parts of the CO₂ capture process (not shown). According to the inventive process, at least a portion of the condensate (**280**) is directed to reflux heater (**285**)**.** The reflux heater (**285**) uses the condensate (**260**) to generate steam (**290**) utilizing heat from a suitable source. In such an embodiment heat may be supplied to the reflux heater (**285**) by condensate (**235**) produced by prior heat transfer in a reboiler (**220**). Heat transfer from the condensate (**235**) generates a sub-cooled condensate (**237**). Steam (**290**) produced in the reflux heater (**285**) is directed to the stripper (**205**), where it is used to aid in the CO₂ removal process.

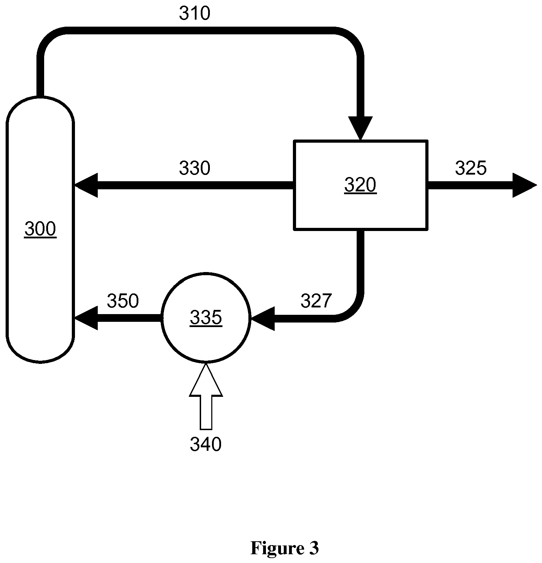

An embodiment not according to the present invention is shown in **FIG. 3****.** At least a portion of an upper product (**310**) obtained from a stripper (**300**) may be condensed in condenser (**320**) to produce a condensed stream. Part of this condensed stream from condenser (**320**) may be returned to the stripper (**300**) as a reflux stream (**330**). Another part of this condensed stream may be provided to a heat exchanger (**335**) that transfers heat from a heat transfer medium (**340**) to produce steam (**350**) that is returned to the stripper (**300**). The heat transfer medium may be flue gas, produced by an upstream boiler or other device and/or devices as described above. Alternatively, the heat transfer medium may be a condensate from a reboiler. In some embodiments the condensed stream may be separated into a CO₂ product (**325**) and a condensate stream (**327**), where the condensate stream forms at least part of the material that is provided to the heat exchanger (**335**) for production of steam (**350**).

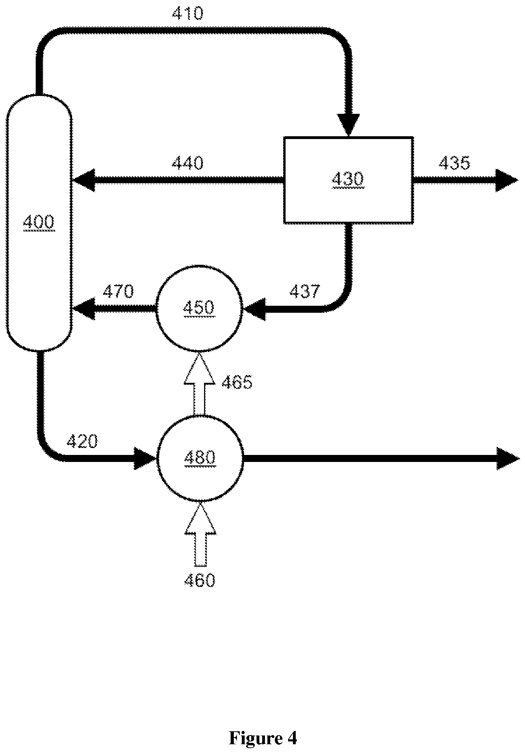

Another embodiment not according to the present inventiont is illustrated in **FIG. 4****.** An upper product stream (**410**) and a solvent stream (**420**) are obtained from a stripper (**400**). At least a portion of the upper product stream (**410**) may be condensed in condenser (**430**) to produce a condensed stream. A portion of this condensed stream from condenser (**430**) may be returned to the stripper (**400**) as a reflux stream (**440**). A second portion of this condensed stream may be provided to a heat exchanger (**450**) to produce steam (**470**) that is returned to the stripper (**400**). The solvent stream (**420**) may be heated in a second heat exchanger (**480**) using a second heat transfer medium (**460**); the resulting cooled second heat transfer medium (**465**) may in turn be utilized by the heat exchanger (**450**) to produce at least a portion of the steam (**470**) utilized by the stripper (**400**). The heat transfer medium (**460**) may be may be, for example, a low pressure steam. In some embodiments the condensed stream may be separated into a CO₂ product (**435**) and a condensate stream (**437**), where the condensate stream forms at least part of the material that is provided to the heat exchanger (**450**) for production of steam (**470**).

In embodiments where reboiler condensate (**235**) is used as a heating medium in a reflux heater (**285**), the condensate can return to the power plant colder in the current art, however, net steam demand is reduced. Typical reductions in steam demand for the present invention may be around 6%. In the case of a power plant, embodiments of the inventive concept reduce the need for low pressure steam to heat the solvent, which can advantageously increase the power output of the generator. This advantageously mitigates the impact of any retrofitting that would be required for a low pressure steam turbine during the installation of a carbon capture plant utilizing an embodiment of the inventive concept.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

## Claims

1. A system for reducing energy requirements of a carbon dioxide (CO₂) capture, comprising:
a stripper (205) configured to (a) receive a rich solvent (200) from a CO₂ capture unit, steam (290), a two-phase solvent stream (225), and a reflux stream (270) in an upper portion of the stripper (205) from an accumulator (265), and (b) produce a CO₂ lean solvent (240) from a bottom of the stripper (205), wherein the lean solvent has a reduced CO2 concentration as compared with the rich solvent; and an upper product (245) comprising CO₂;
a condenser (250) configured to receive at least a portion of the upper product (245) and produce a condensed stream;
the accumulator (265) configured to receive at least some of the condensed stream and produce a CO₂ product stream (255) and a condensate stream (260), wherein the reflux stream (270) is a first portion of the condensate stream (260);
a reboiler (220) configured to: receive a semi-lean solvent (210) from the stripper (205) from a point below a packing, heat the semi-lean solvent to produce the two-phase solvent stream (225), and return the two-phase solvent stream (225) to the stripper (205), wherein the reboiler (220) is configured to heat the semi-lean solvent (210) using a low pressure steam (230) and condense at least a portion of the low pressure steam (230) to produce a reboiler condensate (235); and
a reflux heater (285) distinct from the reboiler (220) and configured to (a) receive a second portion (280) of the condensate stream (260), (b) allow for heat exchange contact of the second portion (280) of the condensate stream (260) with the reboiler condensate (235) to heat the second portion (280) of the condensate stream (260) to produce the steam (290) received in the stripper (205), and (c) produce a sub-cooled condensate stream (237) due to heat transfer from the reboiler condensate (235) to the second portion (280) of the condensate stream (260);
wherein the stripper (205) is fluidly coupled to the reboiler (220);
wherein the low pressure steam (230) is collected from the exhaust of a low pressure turbine from a series of high, mid and low pressure turbines utilized for power generation, or a turbine to power a compressor.

2. The system of claim 1, wherein the system is configured to feed at least a portion of the lean solvent (240) to the CO₂ capture unit.

3. The system of any one of claims 1 - 2, further comprising a CO₂ capture unit, wherein at least a portion of the lean solvent (240) is fed to the CO₂ capture unit.

4. A method for reducing an energy requirement of a CO₂ capture process, comprising:
receiving a CO₂ rich solvent (200) from a CO₂ capture unit in a stripper (205);
condensing at least a portion of an upper product stream (245) of the stripper (205) to produce a condensed stream
separating at least a portion of the condensed stream to produce an upper product (255) comprising CO₂ and a condensate stream (260) in an accumulator (265);
feeding a first portion of the condensate stream (260) to the stripper (205) as a reflux stream (270) in an upper portion of the stripper (205);
heating a second portion (280) of the condensate stream (260) in a reflux heater (285) distinct from a reboiler (220) via heat exchange contact with a reboiler condensate (235) to produce steam (290);
feeding the steam (290) to the stripper(205);
withdrawing a semi-lean solvent stream (210) from the stripper (205) from a point below a packing;
heating the semi-lean solvent stream (210) from the stripper (205) in the reboiler (220) using heat exchange contact with a low pressure steam (230) to produce a two-phase solvent stream (225);
passing the two-phase solvent stream (225) to the stripper (205);
cooling and condensing at least a portion of a low pressure steam (230) via the heat exchange contact with the semi-lean solvent stream (210) in the reboiler (220) to produce the reboiler condensate (235); and
producing a CO₂ lean solvent (240) from a bottom of the stripper (205); wherein the lean solvent has a reduced CO2 concentration as compared to the rich solvent;
wherein the low pressure steam is collected from the exhaust of a low pressure turbine from a series of high, mid and low pressure turbines utilized for power generation, or a turbine to power a compressor.

## Patentansprüche

1. System zum Verringern der Energieanforderungen einer Kohlendioxidabscheidung (CO₂-Abscheidung), wobei das System umfasst:
einen Stripper (205), der dafür konfiguriert ist, (a) von einer CO₂-Abscheideeinheit ein angereichertes Lösungsmittel (200), Dampf (290), einen Zweiphasen-Lösungsmittelstrom (225) und einen Rückflussstrom (270) in einem oberen Abschnitt des Strippers (205) von einem Akkumulator (265) zu empfangen, und (b) von einem Sumpf des Strippers (205) ein CO₂-abgereichertes Lösungsmittel (240), wobei das abgereicherte Lösungsmittel im Vergleich zu dem angereicherten Lösungsmittel eine verringerte CO₂-Konzentration aufweist;
und ein oberes Produkt (245), das CO₂ umfasst, zu erzeugen;
einen Verflüssiger (250), der dafür konfiguriert ist, wenigstens einen Teil des oberen Produkts (245) zu empfangen und einen kondensierten Strom zu erzeugen;
wobei der Akkumulator (265) dafür konfiguriert ist, wenigstens einen Teil des kondensierten Stroms zu empfangen und einen CO₂-Produktstrom (255) und einen Kondensatstrom (260) zu erzeugen, wobei der Rückflussstrom (270) ein erster Teil des Kondensatstroms (260) ist;
einen Reboiler (220), der konfiguriert ist zum: Empfangen eines halb abgereicherten Lösungsmittels (210) von dem Stripper (205) von einem Punkt unter einer Packung, Erwärmen des halb abgereicherten Lösungsmittels, um den Zweiphasen-Lösungsmittelstrom (225) zu erzeugen, und Zurückführen des Zweiphasen-Lösungsmittelstroms (225) zu dem Stripper (205), wobei der Reboiler (220) dafür konfiguriert ist, das halb abgereicherte Lösungsmittel (210) unter Verwendung von Niederdruckdampf (230) zu erwärmen und wenigstens einen Teil des Niederdruckdampfs (230) kondensieren zu lassen, um ein Reboiler-Kondensat (235) zu erzeugen; und
einen Rückflusserhitzer (285), der von dem Reboiler (220) verschieden ist und konfiguriert ist zum: (a) Empfangen eines zweiten Teils (280) des Kondensatstroms (260), (b) Ermöglichen eines Wärmeaustauschkontakts des zweiten Teils (280) des Kondensatstroms (260) mit dem Reboiler-Kondensat (235), um den zweiten Teil (280) des Kondensatstroms (260) zu erwärmen, um den in dem Stripper (205) empfangenen Strom (290) zu erzeugen, und (c) Erzeugen eines unterkühlten Kondensatstroms (237) wegen der Wärmeübertragung von dem Reboiler-Kondensat (235) zu dem zweiten Teil (280) des Kondensatstroms (260);
wobei der Stripper (205) mit dem Reboiler (220) fluidtechnisch gekoppelt ist;
wobei der Niederdruckstrom (230) von dem Auslass einer Niederdruckturbine von einer Reihe einer Hochdruck-, einer Mitteldruck- und einer Niederdruckturbine, die für die Leistungserzeugung genutzt werden, oder von einer Turbine zum Antreiben eines Kompressors gesammelt wird.

2. System gemäß Anspruch 1, wobei das System dafür konfiguriert ist, wenigstens einen Teil des abgereicherten Lösungsmittels (240) der CO₂-Abscheideeinheit zuzuführen.

3. System gemäß einem der Ansprüche 1-2, das ferner eine CO₂-Abscheideeinheit umfasst, wobei wenigstens ein Teil des abgereicherten Lösungsmittels (240) der CO₂-Abscheideeinheit zugeführt wird.

4. Verfahren zum Verringern einer Energieanforderung eines CO₂-Abschei-deprozesses, wobei das Verfahren umfasst:
Empfangen eines CO₂-angereicherten Lösungsmittels (200) von einer CO₂-Abscheideeinheit in einem Stripper (205);
Kondensieren wenigstens eines Teils eines oberen Produktstroms (245) des Strippers (205), um einen kondensierten Strom zu erzeugen;
Trennen wenigstens eines Teils des kondensierten Stroms, um ein oberes Produkt (255), das CO₂ umfasst, und einen Kondensatstrom (260) zu erzeugen, in einem Akkumulator (265);
Zuführen eines ersten Teils des Kondensatstroms (260) zu dem Stripper (205) als ein Rückflussstrom (270) in einen oberen Teil des Strippers (205);
Erwärmen eines zweiten Teils (280) des Kondensatstroms (260) in einem Rückflusserhitzer (285), der von einem Reboiler (220) verschieden ist, über Wärmeaustauschkontakt mit einem Reboiler-Kondensat (235), um einen Strom (290) zu erzeugen;
Zuführen des Stroms (290) zu dem Stripper (205);
Entnehmen eines halb abgereicherten Lösungsmittelstroms (210) von dem Stripper (205) von einem Punkt unter einer Packung;
Erwärmen des halb abgereicherten Lösungsmittelstroms (210) von dem Stripper (205) in dem Reboiler (220) unter Verwendung eines Wärmeaustauschkontakts mit einem Niederdruckstrom (230), um einen Zweiphasen-Lösungsmittelstrom (225) zu erzeugen;
Leiten des Zweiphasen-Lösungsmittelstroms (225) zu dem Stripper (205);
Kühlen und Kondensieren wenigstens eines Teils eines Niederdruckstroms (230) über den Wärmeaustauschkontakt mit dem halb abgereicherten Lösungsmittelstrom (210) in dem Reboiler (220), um das Reboiler-Kondensat (235) zu erzeugen; und
Erzeugen eines CO₂-abgereicherten Lösungsmittels (240) von einem Sumpf des Strippers (205); wobei das abgereicherte Lösungsmittel im Vergleich zu dem angereicherten Lösungsmittel eine verringerte CO₂-Konzentration aufweist;
wobei der Niederdruckstrom von dem Auslass einer Niederdruckturbine von einer Reihe einer Hochdruck-, einer Mitteldruck- und einer Niederdruckturbine, die für die Leistungserzeugung genutzt werden, oder von einer Turbine zum Antreiben eines Kompressors gesammelt wird.

## Revendications

1. Système pour réduire les besoins en énergie d'une capture de dioxyde de carbone (CO₂), comprenant :
un dispositif de stripage (205) configuré pour (a) recevoir un solvant riche (200) d'une unité de capture de CO₂, de la vapeur (290), un flux de solvant à deux phases (225), et un flux de reflux (270) dans une portion supérieure du dispositif de stripage (205) d'un accumulateur (265), et (b) produire un solvant pauvre en CO₂ (240) d'une partie inférieure du dispositif de stripage (205), où le solvant pauvre a une concentration en CO₂ réduite comparée au solvant riche ;
et un produit supérieur (245) comprenant du CO₂ ;
un condenseur (250) configuré pour recevoir au moins une portion du produit supérieur (245) et produire un flux condensé ;
l'accumulateur (265) configuré pour recevoir au moins une partie du flux condensé et produire un flux de produit de CO₂ (255) et un flux de condensat (260),
où le flux de reflux (270) est une première portion du flux de condensat (260) ;
un rebouilleur (220) configuré pour: recevoir un solvant semi-pauvre (210) du dispositif de stripage (205) d'un point en-dessous d'un garnissage, chauffer le solvant semi-pauvre pour produire le flux de solvant à deux phases (225), et renvoyer le flux de solvant à deux phases (225) au dispositif de stripage (205), où le rebouilleur (220) est configuré pour chauffer le solvant semi-pauvre (210) en utilisant une vapeur à basse pression (230) et condenser au moins une portion de la vapeur à basse pression (230) pour produire un condensat de rebouilleur (235) ; et
un chauffeur de reflux (285) distinct du rebouilleur (220) et configuré pour (a) recevoir une seconde portion (280) du flux de condensat (260), (b) permettre un contact d'échange de chaleur de la seconde portion (280) du flux de condensat (260) avec le condensat de rebouilleur (235) pour chauffer la seconde portion (280) du flux de condensat (260) pour produire de la vapeur (290) reçue dans le dispositif de stripage (205), et (c) produire un flux de condensat sous-refroidi (237) en raison du transfert de chaleur du condensat de rebouilleur (235) à la seconde portion (280) du flux de condensat (260) ;
où le dispositif de stripage (205) est couplé de manière fluidique au rebouilleur (220) ;
où la vapeur à basse pression (230) est collectée à partir de l'échappement d'une turbine à basse pression à partir d'une série de turbines à haute, moyenne et basse pression utilisée pour une production d'énergie, ou une turbine pour alimenter en énergie un compresseur.

2. Système de la revendication 1, où le système est configuré pour alimenter au moins une portion de solvant pauvre (240) vers l'unité de capture de CO₂.

3. Système de l'une quelconque des revendications 1 ou 2, comprenant en outre une unité de capture de CO₂, où au moins une portion du solvant pauvre (240) est alimentée vers l'unité de capture de CO₂.

4. Méthode pour réduire un besoin en énergie d'un procédé de capture de CO₂, comprenant :
la réception d'un solvant riche en CO₂ (200) à partir d'une unité de capture de CO₂ dans un dispositif de stripage (205) ;
la condensation d'au moins une portion d'un flux de produit supérieur (245) d'un dispositif de stripage (205) pour produire un flux condensé
la séparation d'au moins une portion du flux condensé pour produire un produit supérieur (255) comprenant du CO₂ et un flux de condensat (260) dans un accumulateur (265) ;
l'alimentation d'une première portion du flux de condensat (260) vers le dispositif de stripage (205) comme un flux de reflux (270) dans une portion supérieure du dispositif de stripage (205) ;
le chauffage d'une seconde portion (280) du flux de condensat (260) dans un chauffeur de reflux (285) distinct d'un rebouilleur (220) à travers un contact d'échange de chaleur avec un condensat de rebouilleur (235) pour produire de la vapeur (290) ;
l'alimentation de la vapeur (290) vers le dispositif de stripage (205) ;
le retrait d'un flux de solvant semi-pauvre (210) à partir du dispositif de stripage (205) à partir d'un point en-dessous d'un garnissage ;
le chauffage du flux de solvant semi-pauvre (210) à partir du dispositif de stripage (205) dans le rebouilleur (220) en utilisant le contact d'échange de chaleur avec une vapeur à basse pression (230) pour produire un flux de solvant à deux phases (225) ;
le passage du flux de solvant à deux phases (225) au dispositif de stripage (205),
le refroidissement et la condensation d'au moins une portion de vapeur à basse pression (230) à travers le contact d'échange de chaleur avec le flux de solvant semi-pauvre (210) dans le rebouilleur (220) pour produire le condensat de rebouilleur (235) ; et
la production d'un solvant pauvre en CO₂ (240) de la partie basse du dispositif de stripage (205) ; où le solvant pauvre a une concentration en CO₂ réduite comparée au solvant riche ;
où la vapeur à basse pression est collectée à partir de l'échappement d'une turbine à basse pression à partir d'une série de turbines à haute, moyenne et basse pression utilisée pour une production d'énergie, ou une turbine pour alimenter en énergie un compresseur.
